Europäisches Patentamt

European Patent Office

Office européen des brevets

(19)

(11) **EP 1 301 055 A1**

(12) **EUROPEAN PATENT APPLICATION**

(43) Date of publication:
**09.04.2003 Bulletin 2003/15**

(51) Int Cl.7: **H04Q 7/38**, G01S 5/02

(21) Application number: **01660234.4**

(22) Date of filing: **18.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Heinonen, Tero**<br>  **00300 Helsinki (FI)**<br>• **Wilkman, Mikko**<br>  **00120 Helsinki (FI)** |
| (30) Priority: **08.10.2001 FI 20011957** | (74) Representative: **Savela, Antti-Jussi et al**<br>**Patent Agency Compatent Ltd.**<br>**Hämeentie 39, 4th. Fl.**<br>**00500 Helsinki (FI)** |
| (71) Applicant: **Locus Portal Corporation**<br>**00100 Helsinki (FI)** | |

(54) **Processing of geographical and movement data for locating a mobile terminal in a mobile network**

(57)    The invention concerns locating mobile terminals in a mobile network. A location estimate is determined based on a parameter set received from the mobile network. In order to improve the accuracy of the system, a matrix is formed for an individual first parameter set, the matrix comprising a plurality of elements, whereby each element is associated with a certain geographical area and contains a value which indicates the probability of the mobile being located within said area. At least one matrix formed for a mobile is stored, and in response to a second parameter set received subsequently for the mobile, (a) the values of at least one matrix stored are updated, based on movement information, and (b) the location estimate is determined on the basis of the element values of the matrix corresponding to the second parameter set and on the basis of the element values of the said at least one matrix having the updated values.

PARAMETER SET

MATRIX FORMATION
OR RETRIEVAL 51

PREVIOUS
MATRIX 52

SURFACE
WEIGHTING 53

UPDATE OF
PREVIOUS MATRIX 54

SPREAD
MATRIX

COMBINED
MATRIX

COMBINATION OF MATRICES 55

CALCULATION OF ESTIMATE(S) 56

ESTIMATE(S)

**FIG. 5**

EP 1 301 055 A1

**Description**

**Field of the invention**

The present invention relates generally to location techniques. More specifically, the present invention relates to determination of the geographical location of a mobile (i.e. a mobile terminal) within a mobile network.

**Background of the invention**

There are two major reasons that have given motivation and fueled the development of location determining techniques in mobile networks. First, different authorities set requirements for the location determination of mobile terminals. It is highly desirable that certain authorities, such as emergency call centers, can locate the calling party as accurately as possible. In many countries legislation sets requirements for such location methods. For example, in the USA mobile location to an accuracy of 50 meters for 67 percent of calls and 150 meters for 95 percent of calls will be mandatory in the near future for handset-based solutions. Second, many of the future services provided in mobile networks will be such that they require information about the current geographical location of the mobile terminal.

The greater the accuracy of a location method, the better it can serve the application utilizing the location information. This applies especially to densely built urban areas where long-range visibility is not possible. The accuracy of the location methods is dependent on many different factors, such as radio propagation effects. This is a major reason why dense urban areas form a difficult and challenging environment in terms of location accuracy, with severe multipath characteristics and signal propagating with less attenuation along street canyons than through buildings.

When a mobile is located, successive measurement results are obtained from the network. The measurement results are typically not received as coordinates but as parameters which define a certain area within which the mobile is located with a certain probability. As the network normally provides several parameters for a single measurement, the parameters relating to a single measurement are in this context denoted as a parameter set. On the basis of the parameter set, geometrical limitations can be determined which define the geographical boundaries of one or more areas where the mobile is most likely located. As discussed below, the determination of the location in current cellular networks is widely based on a parameter set including the cell ID and the Timing Advance value, which indicate how far from a certain base station the mobile most probably is located.

The current location methods employ the parameter sets obtained by first defining the said one or more areas and then calculating an estimate for the location of the mobile. History data, i.e. previous estimates, can then be used to make the current estimate more accurate. One known method, which is based on a least squares scheme, determines a path for which the sum of the squares of the deviations from the estimated location points obtains a minimum value.

A major drawback of the current methods is that they do not preserve the original data revealed by the parameters obtained from the mobile network as to the geographical distribution of the location of the mobile. Instead, with current methods the estimation process moves in an early phase to a point-based approach where the information concerning the geographical distribution is reduced to estimated location points and the final estimate is calculated on the basis of these points. Once the process moves from the geometrical data to point-based information, it can no longer regain the information about the geographical distribution of the location which was included in the parameter sets received from the mobile network.

The objective of the invention is to eliminate the drawback described above and to bring about a solution which enables the accurate location of the mobile through efficient usage of the information obtained from the mobile network.

**Summary of the Invention**

An objective of the present invention is to find a solution to improve the accuracy of the current location methods. Furthermore, the objective is to achieve a solution not requiring extensive prior labor for achieving the improved accuracy, such as field measurements or data collection.

These objectives are achieved with the solution defined in the independent patent claims.

The invention utilizes location-dependent parameters available from a mobile network for determining the location of the mobile terminal. As mentioned above, the parameters relating to a single measurement are in this context denoted as a parameter set. These parameters indicate the geographical areas within which the mobile most probably is located, i.e. how the location of the mobile is geographically distributed over the area of the system.

In order to improve the accuracy of the system, the invention utilizes the geographical information provided by the parameter sets by forming matrices which indicate the probability distribution of the location of the mobile. A matrix is formed for a parameter set received from the mobile network. Each element of the matrix corresponds to a certain geographical area and contains a value which indicates the probability that the respective mobile is within the said area. At least one matrix formed for a mobile is stored as history data to be used in connection with a subsequent parameter set received for the mobile. When such a parameter set is received, the matrix corresponding to the current parameter set is formed or retrieved, and the elements of the matrix stored earlier are updated. In the updating process the effect of the movement of the mobile on the matrix elements is taken into account, the movement being the estimated movement occurring between the measuring events corresponding to the respective parameter sets. The location estimate is then determined on the basis of the element values of the matrix corresponding to the current parameter set and the element values of the matrix with the updated values.

Thus the invention utilizes history data in the form of at least one previously formed matrix, which is updated according to the estimated movement of the mobile. By employing the matrices, the original data received from the mobile network on the geographical distribution of the location of the mobile can be retained. The accuracy of the system can hereby be improved by processing the current matrix by one or more previous matrices associated with the mobile in question.

In one preferred embodiment of the invention, map information is employed in determining the element values of the current matrix. The map information preferably includes information about the type of surface in the geographical area related to an element. The description can be simple, such as road, forest, river, etc. The element values of the current matrix are then weighted according to the type of surface in question.

In another preferred embodiment map information is employed in updating the element values of the matrix formed in connection with a previous parameter set.

In addition to the improved accuracy of the system, a further advantage of the invention is that it does not require any special mechanism or laborious steps for forming the matrices. The matrices can be formed "on-the-fly" based on the parameter set received, or they can be formed in advance and stored in a database. In the latter case the parameter set received is used as a search key for retrieving the correct matrix from the database.

A still further advantage of the invention is that it is not dependent on the network implementation but can be applied to any network where at least one parameter dependent on the location of the mobile is available enabling a matrix to be formed. The method can therefore be used on top of network implementations based on different location-dependent parameters.

### Brief Description of the Drawings

In the following, the invention and its preferred embodiments are described more closely with reference to the examples shown in Figures 1 to 9 in the accompanying drawings, wherein:

FIG. 1     illustrates the location-dependent information available from a typical cellular network utilizing omni cells,

FIG. 2     illustrates the location-dependent information available from a typical cellular network utilizing sectored cells,

FIG. 3     illustrates a preferred embodiment of a system in accordance with the present invention,

FIG. 4     illustrates a sample matrix formed on the basis of a parameter set received from the mobile network,

FIG. 5     is an example of a flow diagram illustrating the method of the invention,

FIG. 6     is an example flow diagram illustrating the processing of a preceding matrix,

FIG. 7     illustrates how the matrix of FIG. 4 is changed when it is updated once, assuming that all directions of mobile movement are equally probable,

FIG. 8     illustrates how the matrix of FIG. 4 is changed when it is updated once, assuming that the mobile is traveling directly eastwards, and

FIG. 9     illustrates one way of forming the matrix which corresponds to a parameter set received.

### Detailed Description of the Invention

As mentioned above, the method of the invention applies to various kinds of location-dependent information. Depending on the particular cellular system, the location-dependent information provided by the network can be signal strength or signal delay, for example. The determination of the location in current cellular networks is widely based on the Timing Advance value, because the Timing Advance value is directly available from the network. Therefore, Timing Advance is in this context used as an example of the location-dependent signal information available from the mobile network for location determination.

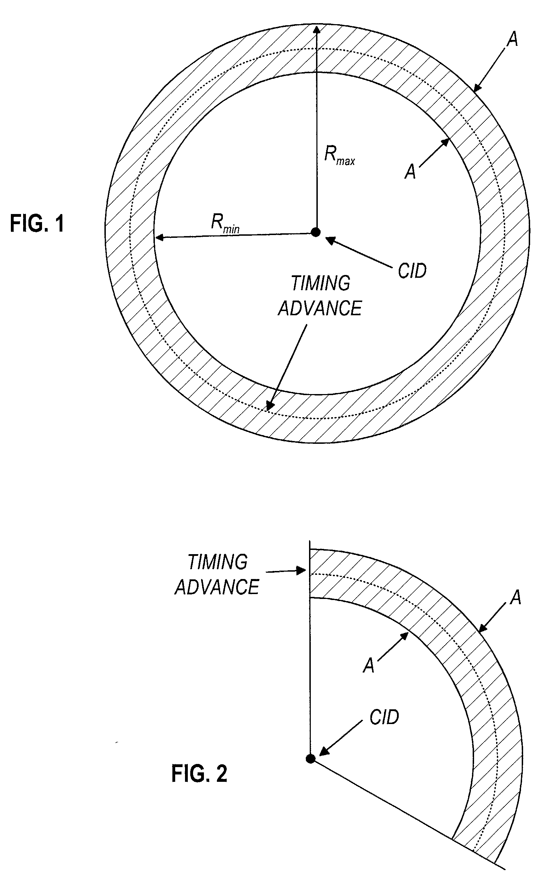

As is known, Timing Advance indicates how far the mobile most probably is from the base station. FIG. 1 illustrates the location dependent information provided by a network with omni-directional base station antennas, whereas FIG. 2 illustrates the same in connection with sectored cell sites. The network typically provides the Timing Advance information as the minimum and maximum distance from the antenna ($R_{min}$ and $R_{max}$), in which case the mobile terminal is with a certain probability between these limits, i.e. the hatched area A in the figures forms the Timing Advance zone defined by said limits. In addition to the Timing Advance information, the network provides the cell identifier CID, which identifies the cell in which the mobile terminal is located. This information can be given as the coordinates of the cell site. The network further provides an identifier for identifying the mobile in question from among the other mobiles and a time stamp indicating the moment of location measurement. In the case of a sectored cell, the network also provides the sector information. Thus for each location determination the network provides a parameter set which commonly includes the following information: cell identifying data, such as the coordinates of the Base Transceiver Station, Timing Advance information, such as $R_{max}$ and $R_{min}$, an identifier for identifying the mobile in question from among the other mobiles, a time stamp indicating the moment of the location measurement, and possibly the sector information.

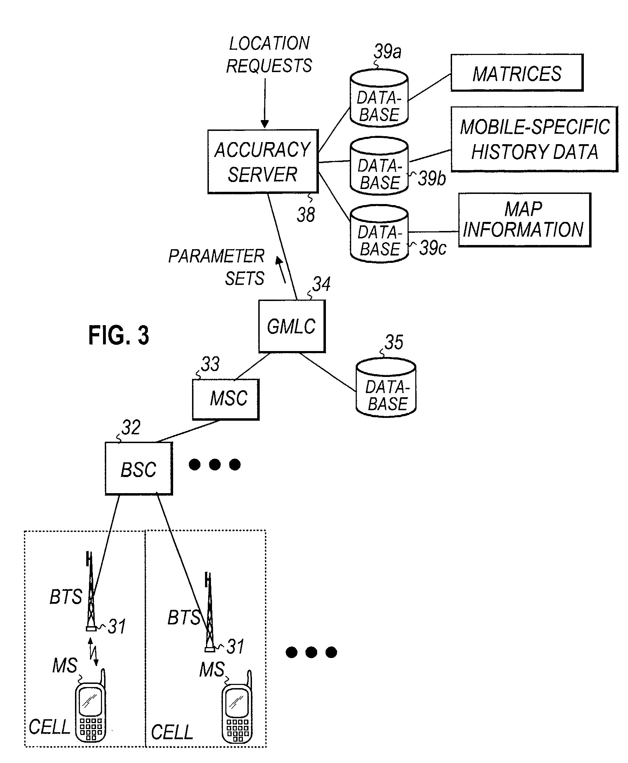

FIG. 3 illustrates the key elements of the system according to the present invention. It is assumed here that the mobile network is a GSM Public Land Mobile Network. Communication between the network and a mobile terminal MS in a cell takes place via a radio path by way of a Base Transceiver Station (BTS) 31. The Base Transceiver Stations are connected to Base Station Controllers (BSC) 32. Several Base Transceiver Stations are usually under the control of one BSC, and several Base Station Controllers are connected to one Mobile Switching Centre (MSC) 33, which carries out the main switching functions of the mobile network. In addition, the MSC connects the mobile network with external networks. For positioning purposes, the MSC is connected to a Gateway Mobile Location Center (GMLC) 34, which collects mobile positioning information in a positioning database 35. As mentioned above, it is assumed in this context that the GMLC supports Cell ID and Timing Advance. This means that for each location determination the GMLC provides a parameter set, including the parameters discussed above in connection with FIG. 1 and 2.

The parameter sets available from the mobile network are processed in an accuracy server 38, which receives location requests from external objects, such as service applications residing in the network to which the accuracy server is connected. In order to be able to determine a location estimate on the basis of a parameter set received, the accuracy server forms a matrix on the basis of the parameter set or retrieves a matrix corresponding to the parameter set from among a plurality of matrices formed in advance and stored in a matrix database 39a. The accuracy server further uses mobile-specific history data stored in a history database 39b. This data comprises matrices obtained in connection with the parameter sets received earlier for the mobile in question. The content of these matrices is discussed below. In determining the element values of the matrices, the accuracy server preferably further employs map information stored in a map database 39c, although the use of map information is not necessary. The same applies to the use of in-advance calculated matrices, i.e. the matrix database is not necessary, but the matrix corresponding to the current parameter set can be calculated in real-time.

The information required by the accuracy server for processing the parameter sets can also be stored in a single database. The information is preferably stored in connection with the accuracy server, although it can be distributed in the network to which the accuracy server is connected.

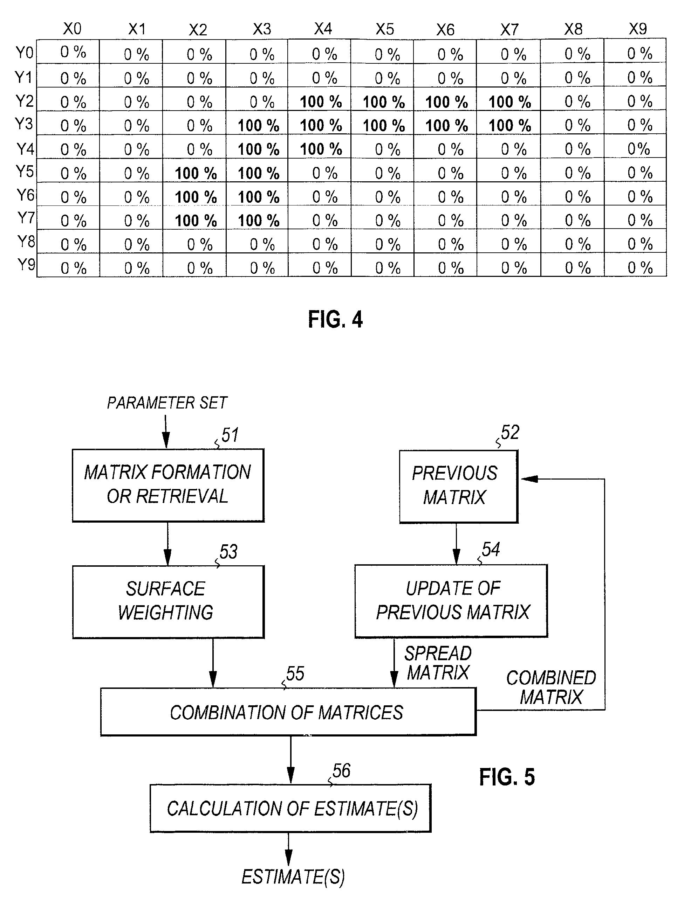

Upon receiving a parameter set, the accuracy server calculates a matrix corresponding to this parameter set. On the other hand, if the matrices have been calculated in advance, the accuracy server retrieves said matrix from the database 39a, and the parameter set is used as a search key for finding the correct matrix. The matrix contains nxn elements, each covering a certain geographical area and each including a value indicating a probability that the mobile is within the area covered by the element. FIG. 4 shows an example of a matrix comprising 10×10 elements. In practice, the number of elements is much greater, e.g. 40×40 elements. Each element corresponds to a coordinate pair Xi/Yi (i=0...9), which defines the geographical area covered by the element. In practice, the size of each element can be 25×25 m, for example, in which case a 40×40 matrix would cover an area of one square kilometer. In the example of Fig. 4, the element values are given as percents. The elements covered by the Timing Advance zone are given the value of 100, while the other elements are given the value of zero.

FIG. 5 illustrates the estimation process performed by the accuracy server. As mentioned above, upon receiving a parameter set the accuracy server calculates a matrix corresponding to this parameter set or retrieves said matrix from the database 39a using the parameter set as a search key (step 51). The parameter sets can go through a normalization process so that the parameter sets which equal one another with a given accuracy are mapped to the same matrix. If the accuracy server retrieves the matrix, the matrices are preferably formed using a suitable calibration mechanism, such as the GPS system. In other words, when the matrices are formed before the commissioning of the system, the distribution of the location of the mobile is determined by the calibration mechanism and the matrix is formed on the basis of the results given by the calibration mechanism. A combinatory mechanism can also be used, for example, so that the matrices calculated in advance are further processed in the accuracy server in order to obtain the final matrix describing the probability distribution. In a preferred embodiment of the invention, this is done by using map information to adjust the element values of the matrix.

In this embodiment the accuracy server retrieves map information in order to weight the element values by this data. The matrices to be weighted can originate from a database or can be formed in real-time by the accuracy server. Map information refers here to any information which correlates with the location probability or with the movement probability of the mobile. The map information used by the accuracy server is preferably in the form of map matrices similar to the matrices formed on the basis of the parameter sets, except that in the map matrices an individual element indicates the type of the surface covered by the element. The classification into surface types can be simple, such as road, forest, river, etc., each type being assigned a weight value. Some types are stronger than others; for instance, if a road goes through a forest, the subscriber is more likely traveling along the road rather than through the forest, so the type of the element is set to "road". The map matrix can be formed in real-time from the information retrieved from the map database, or the information in the database can be in the form of matrices.

The element values of the matrix formed on the basis of the parameter set received are then weighted according to the type of land in question (step 53), whereby a weighted matrix is obtained. A previous matrix obtained in connection with a preceding parameter set relating to the same mobile is also retrieved from the history database 39b, and this matrix is supplied to an update process. In this context, the previous matrix is also called the history matrix. In the update process (step 54) the effect of the estimated movement of the mobile on the location distribution is taken into account by spreading the probability distribution of the previous matrix according to the movement data. This operation is based on the information available about the movement of the mobile, such as speed and/or direction information. Map correlation coupled with movement information can be used to yield more accurate results. If no information on the movement is available, the probability distribution is spread evenly in all directions. As a result of the update process, a spread history matrix is obtained.

The current matrix and the spread history matrix are supplied to a combination process where a combined matrix of the same size is determined according to predetermined rules (step 55). At least one location estimate is then calculated on the basis of the combined matrix (step 56). Furthermore, the combined matrix is supplied to the history database, where it replaces the previous matrix, i.e. the next time the previous matrix is retrieved, the combined matrix calculated in connection with the then preceding parameter set is obtained as the previous matrix to be updated.

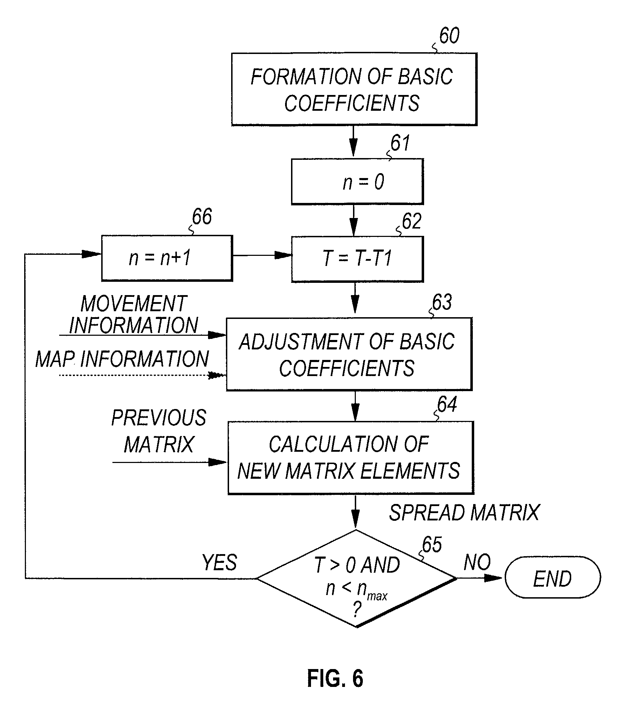

FIG. 6 illustrates the updating of the previous matrix, in which the values of the previous matrix are updated according to the assumed movement of the mobile. The update process includes one or more calculation rounds. During each round the probability distribution carried by the history matrix is spread once. The process employs three parameters which define how many rounds are needed each time; n, T, and T1, where n indicates the number of times the spreading has been performed, T indicates the time elapsed from the previous update process (i.e. the time elapsed since the location of the mobile was estimated previously), and T1 is a fixed time interval which is deducted from T every time the matrix is spread.

The process first forms $n1 \times n1$ basic coefficients $w_{i,j}$ used in the spreading process (step 60). In this example $n1=3$ and all the coefficients get the value of 1 as follows:

$$W = \begin{bmatrix} w_{i-1,j-1} & w_{i,j-1} & w_{i+1,j-1} \\ w_{i-1,j} & w_{i,j} & w_{i+1,j} \\ w_{i-1,j+1} & w_{i,j+1} & w_{i+1,j+1} \end{bmatrix} = \begin{bmatrix} 1 & 1 & 1 \\ 1 & 1 & 1 \\ 1 & 1 & 1 \end{bmatrix}.$$

Parameter n is then given the value of zero (step 61), since no spreading has yet taken place, and the value of T1 is deducted from the value of T (step 62).

The basic coefficients are then adjusted according to the movement information relating to the mobile, such as the direction and speed information (step 63). Map information can also be utilized in determining the adjusted coefficients. It is assumed in this example that the mobile is moving directly eastwards, whereby the adjusted coefficients $w'_{i,j}$ are as follows:

$$W' = \begin{bmatrix} w'_{i-1,j-1} & w'_{i,j-1} & w'_{i+1,j-1} \\ w'_{i-1,j} & w'_{i,j} & w'_{i+1,j} \\ w'_{i-1,j+1} & w'_{i,j+1} & w'_{i+1,j+1} \end{bmatrix} = \begin{bmatrix} 1 & 1 & 0 \\ 1 & 1 & 0 \\ 1 & 1 & 0 \end{bmatrix}.$$

In a spreading process the adjusted coefficients are then used to adjust the value of each element $e_{k,l}$ of the history matrix as follows (step 64):

$$E_{k,l} = \frac{\sum_{k=i-1}^{i+1} \sum_{l=j-1}^{j+1} w'_{k,l} \times e_{k,l}}{M}$$

where M is the sum of adjusted coefficients deviating from zero, and $E_{k,l}$ is the element value of the spread matrix. Thus the spread matrix is obtained so that each element of the previous matrix is replaced by a weighted average of itself and those of its neighbors which do not get a zero weight. In practice the number of elements affecting the adjusted value of each element can be greater, for example 16 (4×4 weights) or 25 (5×5 weights).

After the first spreading round, the accuracy server tests whether T is still greater than zero and n smaller than a predefined limit $n_{max}$ (step 65). If this is the case, the above-described spreading steps 63 and 64 are repeated. At the beginning of each new round, the value of n is incremented by one (step 66), and the value of T1 is deducted from the current value of T (step 62). A new matrix is calculated as long as T remains greater than zero, and n smaller than a predefined limit $n_{max}$.

As to step 63, it is further to be noted that the adjustment of the basic coefficients by means of the movement information may be performed only once for each update process (i.e once for each step 54). The adjustment according to the map information has to be made separately for each matrix element during each spreading round, since the map information used to adjust the coefficients is element-specific, i.e. depends on the area defined by the element.

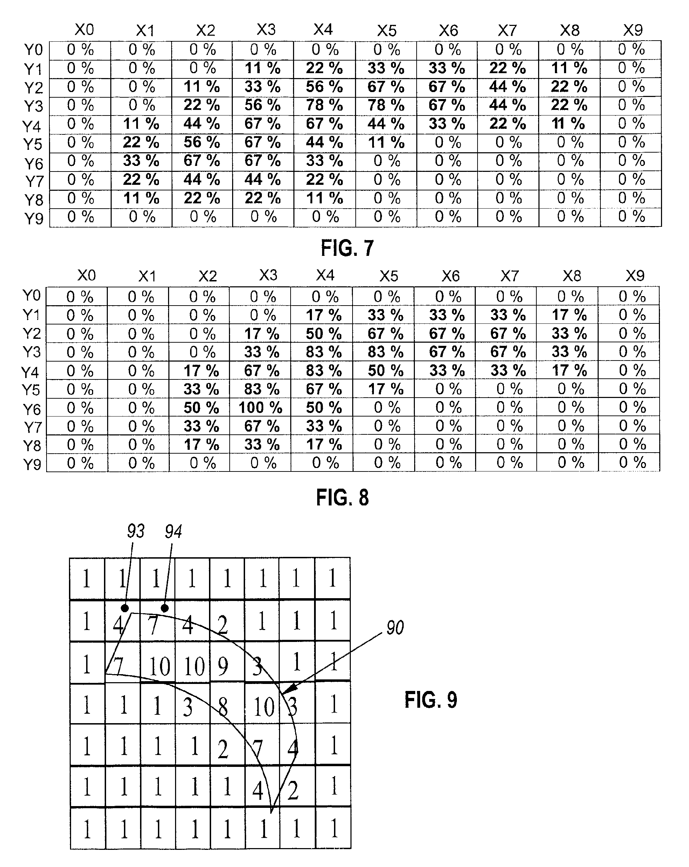

FIG. 7 illustrates how the matrix of FIG. 4 has changed after one spreading round when the above basic coefficients are used. Thus in this case no direction-based weighting is employed, but it is assumed that all directions are equally probable. As can be seen from the figure, the probability distribution has spread; the number of elements having a non-zero value has increased from 17 to 45.

FIG. 8 illustrates how the matrix of FIG. 4 has changed after one spreading round when the above-described adjusted coefficients are used. Thus, in this case it is assumed that the mobile is traveling eastwards. Now the number of elements having a non-zero value has increased to 37. Utilizing the map information in the spreading process means that the probabilities spread faster along roads than along forests, for example.

The spread history matrix and the current matrix can be combined in various ways. However, there are always two probability values, A and B, corresponding to a certain area, one from the element corresponding to the respective area in the current matrix and another from the element corresponding to the respective area in the spread matrix. In the combination process (step 55), a new element value is determined for the respective element of the combined matrix based on these two values. There are at least three possible ways to determine the new element value for each element of the combined matrix:

1. calculate the sum of the two values, i.e. A+B,
2. calculate a weighted sum of the two values, i.e. r×A+(1-r)×B,
3. select the value which is the highest one, i.e. max{A, B}.

As mentioned above, the combined matrix formed in one of the above ways is stored as a new history matrix.
Based on the values of the combined matrix, the final estimate(s) can also be determined in various ways. At least the following ways are possible:

1. The coordinates of the element containing the highest value are selected as the location estimate.
2. The coordinates corresponding to the center of gravity of the element values are selected as the location estimate. The center of gravity here refers to an average (calculated in a desired way) of the coordinate values associated with the element values.
3. A certain area, which is obtained based on the previous estimate and the speed and/or direction information, is examined. The element containing the highest value within that area is then selected as the location estimate. Another alternative is to select as the location estimate the coordinates corresponding to the center of gravity of the element values of the area.
4. Local averages can be calculated for element groups of the desired size. For example, averages can be computed over local areas of 100×100 m$^2$, and the center point of the local area having the highest average can be selected as the local estimate. The form of the local area can also be other than a square, for example a circle.
5. Areas of predetermined form, such as circles, are drawn around estimate candidates, each area covering a certain proportion of the total sum of the elements. The candidate is then selected for which the said area is the smallest.

The best alternative can be selected by testing the system in the desired environment and finding the alternative yielding the best results.

The formation of the matrix corresponding to the current parameter set (step 51) is discussed next. As mentioned above, the matrix can be formed directly in real-time on the basis of the parameter set, or it can be retrieved from among the matrices produced in advance by using the parameter set as a search key. A third alternative is to use a combination of these two methods.

When the matrix is formed in real-time from the parameter set, the geometrical counterpart of the parameter set, i.e. the area defined by the parameter set, can be superimposed on an empty matrix covering the area in question. FIG. 9 illustrates this by showing a Timing Advance zone 90 superimposed on a $7 \times 7$ matrix. Elements are then assigned values which reflect correspondence between area represented by the element, and the area that is actually covered by the parameter set. Thus for example, Fig. 9 the shape 90 represents the geometrical area indicated by the parameter set. In the case of element 93 only about 40% of the element area is covered by shape 90, and thus the element is assigned the value 4, while element 95 is covered by shape 90 to about 70% of its area, and thus is given the value 7. As the matrix values range from one (no coverage) to ten (full coverage), these values can then be adjusted employing the map information. Alternatively, all the elements overlapping the geometric counterpart can be assigned the value of one, while the rest of the elements, which do not overlap with the geometrical counterpart, are assigned the value of zero.

When the matrix is retrieved from a database containing matrices formed in advance, it is preferable to measure the actual probability distribution by means of a suitable mechanism, such as the GPS. Thus, in this case the matrix elements indicate the probability distribution measured in advance in real environment. The parameter sets which are substantially equal to each other, i.e. which with a desired accuracy have the same parameter values, are associated with the same matrix.

The third alternative which combines the above mechanisms could be such that an in-advance calculated matrix is always used when it is available, while the matrix is computed in real-time only when no calculated matrix is available in advance. This is because a matrix determined in-advance probably represents a more reliable perception of the probability distribution.

Although the invention was described above with reference to the examples shown in the appended drawings, it is obvious that the invention is not limited to these, but may be modified by those skilled in the art without departing from the scope and spirit of the invention. In a simplified form of the invention, no map information or direction information is used, i.e. the probability distribution is spread evenly in all directions. More than one history matrix can be employed for processing the current matrix. The network elements used can also vary. For example, the parameter sets can be received from any network entity having access to them, and the steps of the method can be distributed among different network elements. In the future a mobile may perform some or all of the steps of the method. Depending on the content of the parameter set, a mobile terminal might simply need external information required to form the matrices in order to be able to perform the steps of the method. In a further embodiment, the mobile terminal can download predetermined matrices from the network, i.e. matrix formation is not necessarily needed in the terminal. Upon receiving a parameter set, the mobile terminal retrieves or downloads from the network an in-advance calculated matrix which corresponds to the parameter set received. In this respect the mobile terminal can thus act similarly as the accuracy server.

**Claims**

**1.** A method for locating mobile terminals in a mobile network, the method comprising the steps of:

receiving location-dependent parameter sets, each parameter set comprising at least one parameter indicative of the location of an individual mobile terminal; and
determining a location estimate for a parameter set received, the location estimate indicating the location of the respective mobile terminal;

**characterized by** the steps of:

for an individual first parameter set, forming a matrix corresponding to said set, the matrix comprising a plurality of elements, whereby each element is associated with a certain geographical area and contains a value indicating a probability of the mobile being located within said area;
storing at least one matrix formed for a mobile; and,
in response to a second parameter set subsequently received for the mobile;

- updating the values of at least one matrix stored for the mobile; and,
- determining the location estimate on the basis of the element values of the matrix corresponding to the second parameter set and on the basis of the element values of the said at least one matrix having the updated values.

2. The method as defined in claim 1, **characterized in that** the determining step includes

- combining the element values of the matrix corresponding to the second parameter set received and the element values of said at least one matrix having the updated values according to predetermined rules, whereby a combined matrix is obtained; and,
- defining the location estimate on the basis of the combined matrix.

3. The method as defined in claim 2, **characterized in that** the storing step includes storing the combined matrix; and, the updating step includes updating the values of the combined matrix obtained in connection with a preceding parameter set received for the mobile.

4. The method as defined in claim 3, **characterized in that** the updating step includes updating the values repetitively in successive calculation cycles, whereby the updated values obtained in a calculation cycle are updated in the next calculation cycle.

5. The method as defined in claim 4, **characterized in that** the number of calculation cycles is directly proportional to the time elapsed since the updating step performed in connection with the preceding parameter set received for the mobile.

6. The method as defined in claim 1, **characterized in that** the forming step includes weighting said values on the basis of map information describing surface types of said geographical areas.

7. The method as defined in claim 1, **characterized in that** the updating step includes weighting the values of said at least one matrix on the basis of information indicating the movement of the mobile.

8. The method as defined in claim 1, **characterized in that** the updating step includes weighting the values of said at least one matrix on the basis of map information describing surface types of said geographical areas.

9. The method as defined in claim 1, **characterized in that** the forming step includes calculating the matrix in response to a parameter set received.

10. The method as defined in claim 1, **characterized in that** the forming step includes

- calculating a plurality of matrices in advance,
- associating each matrix with at least one parameter set, and in response to a parameter set received, retrieving a matrix corresponding to said parameter set.

11. A system for locating mobile terminals in a mobile network, the system comprising:

first means for receiving parameter sets, each parameter set including at least one parameter indicative of the location of an individual mobile terminal and
second means for finding a location estimate for a parameter set received, the location estimate indicating the location of the respective mobile terminal,

**characterized in that** the system comprises
third means for forming a matrix corresponding to a parameter set, the matrix comprising a plurality of elements, whereby each element is associated with a certain geographical area and contains a value indicating a probability of the mobile being located within said area, and
fourth means for storing at least one matrix formed for a mobile,
wherein the second means, responsive to a parameter set received for the mobile, are adapted (a) to update the values of at least one matrix stored for the mobile and (b) to determine the location estimate on the basis of the element values of the matrix corresponding to the parameter set received and on the basis of the element values of the matrix with the updated values.

12. A mobile terminal for a mobile network, the mobile terminal comprising:

first means for receiving parameter sets, each parameter set including at least one parameter whose value is dependent on the location of the mobile terminal within the network and

second means for finding a location estimate for a parameter set received, the location estimate indicating the location of the mobile terminal,

**characterized in that** the mobile comprises

third means for storing at least one matrix in the mobile,the matrix comprising a plurality of elements, whereby each element is associated with a certain geographical area and contains a value which indicates a probability of the mobile locating within said area,

wherein the second means, responsive to a parameter set received, are adapted (a) to update the values of at least one matrix stored in the mobile and (b) to determine the location estimate on the basis of the element values of the matrix corresponding to the parameter set received and on the basis of the element values of the matrix with the updated values.

13. A mobile terminal as defined in claim 12, **characterized by** further comprising means for forming a matrix corresponding to a parameter set received.

14. A mobile terminal as defined in claim 12, **characterized by** further comprising means for downloading from the mobile network a predetermined matrix corresponding to a parameter set received by the mobile.

15. A computer program product stored on a computer readable storage media, the product being adapted to perform the steps of claim 1 when run on a computer.

**FIG. 1**

$R_{max}$

$R_{min}$

$A$

$A$

$CID$

*TIMING ADVANCE*

**FIG. 2**

*TIMING ADVANCE*

$A$

$A$

$CID$

FIG. 3

| | X0 | X1 | X2 | X3 | X4 | X5 | X6 | X7 | X8 | X9 |
|----|-----|-----|-------|-------|-------|-------|-------|-------|-----|-----|
| Y0 | 0 % | 0 % | 0 % | 0 % | 0 % | 0 % | 0 % | 0 % | 0 % | 0 % |
| Y1 | 0 % | 0 % | 0 % | 0 % | 0 % | 0 % | 0 % | 0 % | 0 % | 0 % |
| Y2 | 0 % | 0 % | 0 % | 0 % | 100 % | 100 % | 100 % | 100 % | 0 % | 0 % |
| Y3 | 0 % | 0 % | 0 % | 100 % | 100 % | 100 % | 100 % | 100 % | 0 % | 0 % |
| Y4 | 0 % | 0 % | 0 % | 100 % | 100 % | 0 % | 0 % | 0 % | 0 % | 0% |
| Y5 | 0 % | 0 % | 100 % | 100 % | 0 % | 0 % | 0 % | 0 % | 0 % | 0 % |
| Y6 | 0 % | 0 % | 100 % | 100 % | 0 % | 0 % | 0 % | 0 % | 0 % | 0 % |
| Y7 | 0 % | 0 % | 100 % | 100 % | 0 % | 0 % | 0 % | 0 % | 0 % | 0 % |
| Y8 | 0 % | 0 % | 0 % | 0 % | 0 % | 0 % | 0 % | 0 % | 0 % | 0 % |
| Y9 | 0 % | 0 % | 0 % | 0 % | 0 % | 0 % | 0 % | 0 % | 0 % | 0 % |

## FIG. 4

PARAMETER SET

MATRIX FORMATION OR RETRIEVAL — 51

PREVIOUS MATRIX — 52

SURFACE WEIGHTING — 53

UPDATE OF PREVIOUS MATRIX — 54

SPREAD MATRIX

COMBINED MATRIX

COMBINATION OF MATRICES — 55

CALCULATION OF ESTIMATE(S) — 56

ESTIMATE(S)

## FIG. 5

**FIG. 6**

| | X0 | X1 | X2 | X3 | X4 | X5 | X6 | X7 | X8 | X9 |
|---|---|---|---|---|---|---|---|---|---|---|
| Y0 | 0 % | 0 % | 0 % | 0 % | 0 % | 0 % | 0 % | 0 % | 0 % | 0 % |
| Y1 | 0 % | 0 % | 0 % | 11 % | 22 % | 33 % | 33 % | 22 % | 11 % | 0 % |
| Y2 | 0 % | 0 % | 11 % | 33 % | 56 % | 67 % | 67 % | 44 % | 22 % | 0 % |
| Y3 | 0 % | 0 % | 22 % | 56 % | 78 % | 78 % | 67 % | 44 % | 22 % | 0 % |
| Y4 | 0 % | 11 % | 44 % | 67 % | 67 % | 44 % | 33 % | 22 % | 11 % | 0 % |
| Y5 | 0 % | 22 % | 56 % | 67 % | 44 % | 11 % | 0 % | 0 % | 0 % | 0 % |
| Y6 | 0 % | 33 % | 67 % | 67 % | 33 % | 0 % | 0 % | 0 % | 0 % | 0 % |
| Y7 | 0 % | 22 % | 44 % | 44 % | 22 % | 0 % | 0 % | 0 % | 0 % | 0 % |
| Y8 | 0 % | 11 % | 22 % | 22 % | 11 % | 0 % | 0 % | 0 % | 0 % | 0 % |
| Y9 | 0 % | 0 % | 0 % | 0 % | 0 % | 0 % | 0 % | 0 % | 0 % | 0 % |

**FIG. 7**

| | X0 | X1 | X2 | X3 | X4 | X5 | X6 | X7 | X8 | X9 |
|---|---|---|---|---|---|---|---|---|---|---|
| Y0 | 0 % | 0 % | 0 % | 0 % | 0 % | 0 % | 0 % | 0 % | 0 % | 0 % |
| Y1 | 0 % | 0 % | 0 % | 0 % | 17 % | 33 % | 33 % | 33 % | 17 % | 0 % |
| Y2 | 0 % | 0 % | 0 % | 17 % | 50 % | 67 % | 67 % | 67 % | 33 % | 0 % |
| Y3 | 0 % | 0 % | 0 % | 33 % | 83 % | 83 % | 67 % | 67 % | 33 % | 0 % |
| Y4 | 0 % | 0 % | 17 % | 67 % | 83 % | 50 % | 33 % | 33 % | 17 % | 0 % |
| Y5 | 0 % | 0 % | 33 % | 83 % | 67 % | 17 % | 0 % | 0 % | 0 % | 0 % |
| Y6 | 0 % | 0 % | 50 % | 100 % | 50 % | 0 % | 0 % | 0 % | 0 % | 0 % |
| Y7 | 0 % | 0 % | 33 % | 67 % | 33 % | 0 % | 0 % | 0 % | 0 % | 0 % |
| Y8 | 0 % | 0 % | 17 % | 33 % | 17 % | 0 % | 0 % | 0 % | 0 % | 0 % |
| Y9 | 0 % | 0 % | 0 % | 0 % | 0 % | 0 % | 0 % | 0 % | 0 % | 0 % |

**FIG. 8**

**FIG. 9**

**European Patent Office**

## EUROPEAN SEARCH REPORT

Application Number

EP 01 66 0234

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | US 6 249 252 B1 (DUPRAY DENNIS J)<br>19 June 2001 (2001-06-19)<br>* abstract *<br>* column 23, line 21 - line 31 *<br>* column 38, line 4 - line 18 *<br>* column 3, line 41 - line 52 *<br>* column 27, line 62 - column 29, line 12 *<br>* column 35, line 11 - line 33 *<br>* column 7, line 48 - line 51 *<br>* column 30, line 36 - line 66 *<br>* column 44, line 27 - line 35 *<br>* column 27, line 1 - line 52 *<br>* column 13, line 22 - line 29 *<br>* column 41, line 52 - line 61 * | 1-11,15<br><br>12-14 | H04Q7/38<br>G01S5/02 |
| Y | GB 2 329 801 A (MATSUSHITA ELECTRIC IND CO LTD) 31 March 1999 (1999-03-31)<br>* page 8, line 1 - line 28 *<br>* page 16, line 3 - line 10 *<br>* page 17, line 20 - line 22 *<br>* page 19, line 20 - page 20, line 9 *<br>* page 24, line 13 - line 23 *<br>* figure 9 *<br>* page 23, line 4 - line 11 *<br>* page 26, line 4 - line 17 *<br>* page 62, line 3 - line 5 * | 12-14 | |
| A | WO 98 01768 A (DRANE CHRISTOPHER R ;MACNAUGHTAN MALCOLM D (AU); SCOTT CRAIG A (AU) 15 January 1998 (1998-01-15)<br>* the whole document * | 1-15 | TECHNICAL FIELDS SEARCHED (Int.Cl.7)<br><br>H04Q<br>G01S |

The present search report has been drawn up for all claims

| Place of search | Date of completion of the search | Examiner |
|---|---|---|
| MUNICH | 21 August 2002 | Ramenzoni, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                EP 01 66 0234

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2002

| Patent document cited in search report | | Publication date | Patent family member(s) | | Publication date |
|---|---|---|---|---|---|
| US 6249252 | B1 | 19-06-2001 | US | 6236365 B1 | 22-05-2001 |
| | | | US | 2001022558 A1 | 20-09-2001 |
| GB 2329801 | A | 31-03-1999 | JP | 3161334 B2 | 25-04-2001 |
| | | | JP | 10051840 A | 20-02-1998 |
| | | | CN | 1164807 A | 12-11-1997 |
| | | | GB | 2311697 A ,B | 01-10-1997 |
| | | | HK | 1001650 A1 | 07-04-2000 |
| | | | HK | 1016807 A1 | 20-04-2000 |
| | | | JP | 3165391 B2 | 14-05-2001 |
| | | | JP | 10094040 A | 10-04-1998 |
| | | | US | 6275190 B1 | 14-08-2001 |
| | | | US | 6304218 B1 | 16-10-2001 |
| | | | US | 6362783 B1 | 26-03-2002 |
| | | | US | 6359587 B1 | 19-03-2002 |
| | | | US | 6259406 B1 | 10-07-2001 |
| | | | US | 6140964 A | 31-10-2000 |
| WO 9801768 | A | 15-01-1998 | AU | 716647 B2 | 02-03-2000 |
| | | | AU | 3249497 A | 02-02-1998 |
| | | | WO | 9801768 A1 | 15-01-1998 |